Europäisches Patentamt

European Patent Office

Office européen des brevets

(11) Publication number: **0 462 950 A1**

# EUROPEAN PATENT APPLICATION

(21) Application number: **91850131.3**

(51) Int. Cl.⁵: **A01B 63/111**

(22) Date of filing: **17.05.91**

(30) Priority: **21.05.90 FI 902498**

(43) Date of publication of application:
**27.12.91 Bulletin 91/52**

(84) Designated Contracting States:
**DE DK ES FR GB IT SE**

(71) Applicant: **Valmet Oy
Punanotkonkatu 2
SF-00130 Helsinki 13 (FI)**

(72) Inventor: **Huuskonen, Pekka
Lehdonmutka 4
FI-40420 Jyskä (FI)**

(74) Representative: **Wallin, Bo-Göran et al
AWAPATENT AB Box 5117
S-200 71 Malmö (SE)**

(54) Method and arrangement for automatic limitation of the slippage of the driving wheels of a tractor or of an equivalent working machine.

(57) The invention concerns a method for automatic limitation of the slippage of the driving wheels of a tractor or of an equivalent working machine in a tractor or equivalent which is provided with an electro-hydraulically operating, electronically controlled lifting gear (12) that is intended for operation of working machines and devices connected to the tractor or equivalent. In the method, the slippage of the driving wheels (8) is determined by measuring the speed of rotation of the driving wheels (8) and the factual travel speed of the tractor or equivalent and by comparing said speeds with one another in an electronic central unit (18). According to the invention, into the central unit (18), a permitted limit value is programmed for the slippage of the driving wheels and the desired correction movement is preset for the height position of the lifting gear (12), whereby, when the factual slippage of the driving wheels (8) is increased to a level higher than said limit value, the slippage of the driving wheels (8) is limited by raising the lifting gear (12) by the amount of the preset correction movement. The invention also concerns a control system that makes use of the method.

EP 0 462 950 A1

Jouve, 18, rue Saint-Denis, 75001 PARIS

The invention concerns a method for automatic limitation of the slippage of the driving wheels of a tractor or of an equivalent working machine in a tractor or equivalent which is provided with an electro-hydraulically operating, electronically controlled lifting gear that is intended for operation of working machines and devices connected to the tractor or equivalent, in which method the slippage of the driving wheels is determined by measuring the speed of rotation of the driving wheels and the factual travel speed of the tractor or equivalent and by comparing said speeds with one another in an electronic central unit.

The invention also concerns an arrangement for automatic limitation of the slippage of the driving wheels of a tractor or of an equivalent working machine in a tractor or equivalent which is provided with an electro-hydraulically operating, electronically controlled lifting gear that is intended for operation of working machines and devices connected to the tractor or equivalent, said arrangement including detectors for measurement of the gearbox speed and of the factual travel speed, a programmable central unit, to which said detectors have been arranged to feed signals corresponding to the measurement data, and which central unit is arranged, on the basis of said signals, to calculate the momentary slippage of the driving wheels, and said arrangement further including a lifting-gear control unit, which is connected to the lifting cylinder of the lifting gear through a proportional valve and which is provided with a position regulator.

Farm tractors and corresponding working machines are usually provided with hydraulically operating lifting gears, usually three-point lifting gears, which are intended for operation of working machines and devices connected to the tractor. Usually the lifting gear consists of a lifting cylinder or cylinders, an equalizer shaft, lifting arms, lifting rods, and of traction arms. The hydraulic system of the lifting gear has been traditionally controlled by means of a mechanically operated valve with feedback so that the driver selects the desired position of the lifting gear, whereby, by means of the mechanical feedback, the hydraulic system of the lifting gear maintains this position irrespective of any load fitted on the lifting gear. The system is also provided with a feedback of the tractive effort, so that the driver can also select the desired resistance to traction, whereby the system attempts to keep this resistance to traction invariable. A mechanical feedback, however, involves a number of drawbacks, which are, for example, several wearing parts and plays and, resulting from them, lacking accuracy of adjustment, as well as many ergonomic factors. Owing to these drawbacks, at present, increasing use has been made of an electrohydraulic lifting gear, in which the feedback of the position of the lifting gear and of the resistance to traction has been accomplished electronically.

The sensing and the feedback of the resistance to traction operate so that the control system attempts to maintain the tractive effort invariable. In such a case, e.g. when ploughing the field by means of ploughs, the resistance to traction is varied in accordance with the nature of the soil, and the control system adjusts the working height of the lifting gear, i.e. the working depth of the plough, so that the resisting force remains invariable. According to this principle, e.g., the working depth of the plough may vary highly extensively. The control system is also sensitive to other factors, such as slippage of the driving wheels of the tractor, for, when the wheels slip, the resistance to traction is reduced and, in such a case, the control system controls the working depth to make it still deeper. This results in an ever worse situation. In view of elimination of this drawback, slip-limitation systems have also been developed, in which the slippage of the driving wheels of the tractor is sensed and, on this basis, the reduced resistance to traction is compensated for. However, as a rule, in these systems, the limitation of slippage produces an excessive reaction, in which case, in a situation of slipping, the working machine rises even apart from the soil and the result of the work is even poorer than without slippage control. Also, in such control systems, during the correction movement, disturbing vibration resulting from the principle of operation occurs.

The object of the present invention is to provide a method and a control system by whose means the limitation of the slippage of the driving wheels of a tractor or of an equivalent working machine has been automated so that, at the same time, the drawbacks related to the prior-art systems are avoided. In view of achieving this, the method in accordance with the invention is mainly characterized in that, into the central unit, a permitted limit value is programmed for the slippage of the driving wheels and that the desired correction movement is preset for the height position of the lifting gear, whereby, when the factual slippage of the driving wheels is increased to a level higher than said limit value, the slippage of the driving wheels is limited by raising the lifting gear by the amount of the preset correction movement.

On the other hand, the arrangement in accordance with the invention is mainly characterized in that, into said central unit, a permitted limit value of the slippage of the driving wheels has been programmed in advance and that, to the central unit, an operation unit is connected, by whose means a correction movement of the desired magnitude can be preset for the height position of the lifting gear, whereby, when the factual slippage of the driving wheels exceeds the permitted limit value of slippage, the control system is arranged to correct the height position of the lifting gear by the amount of the preset correction movement.

By means of the invention, compared with the prior art, a number of advantages are obtained, whereof, e. g., the following should be stated in this connection. In the method and arrangement in accordance with the invention, the tractor driver can adjust and select the magnitude of the correction movement of the lifting gear, in which case the arrangement in accordance with the invention can be adapted simply and easily to different types of soil, e.g., when ploughing by means of a tractor. The arrangement in accordance with the invention is accomplished so that the regulation of the slippage of the driving wheels and the correction of the position of the lifting gear operate smoothly without disturbing vibration. The other advantages and characteristics of the invention come out from the following detailed description of the invention.

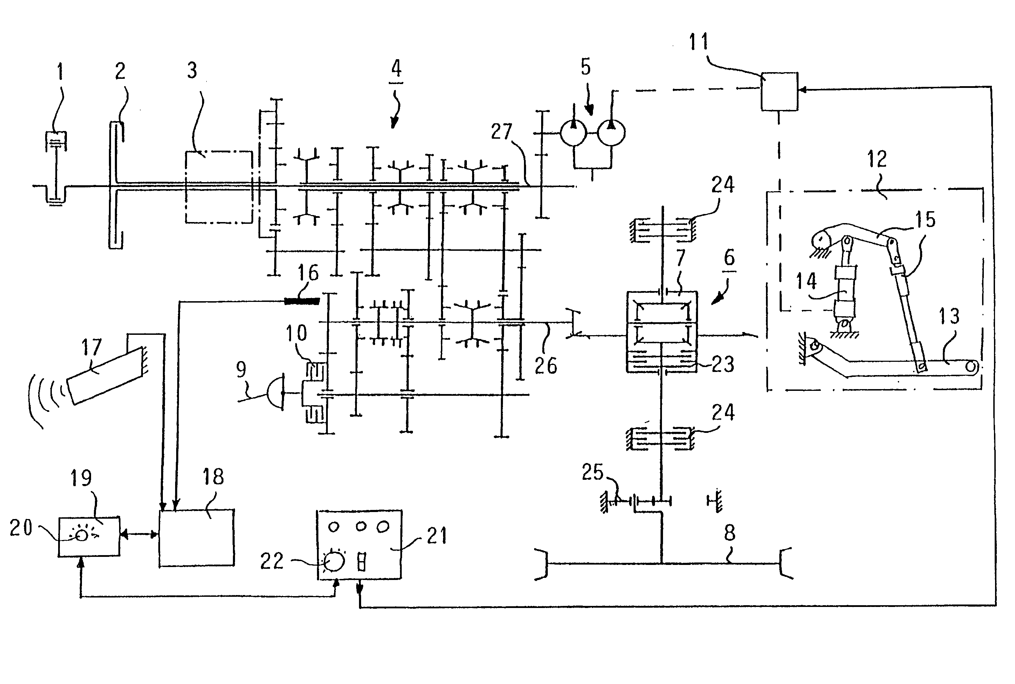

In the following, the invention will be described by way of example with reference to the figure in the accompanying drawing. The only figure in the drawing is a fully schematic illustration of the power-transmission and lifting-gear system of a tractor or equivalent wherein the method in accordance with the invention and a control system that makes use of the method are applied.

In the figure, the engine of the tractor is denoted schematically with the reference numeral 1, the driving clutch with the reference numeral 2, the gearbox with the reference numeral 4, and the hydraulic pump with the reference numeral 5. The hydraulic pump 5 is operated by means of the shaft 27, which is connected to the engine 1 so that the rotation of the shaft 27 is independent from the position of the driving clutch 2 and from the transmission ratio of the gearbox 4. In the figure, it is shown further that a pre-gearbox, a so-called instant gearbox, denoted with the reference numeral 3, may be fitted between the driving clutch 2 and the gearbox 4, said instant gearbox, as a rule, comprising 2...4 selectable speed ranges. The power transmission system further includes a driving rear axle 6, which includes a differential gear 7 of the rear axle, which is provided with a differential lock 23 of the type of a multi-disk clutch. In the conventional way, the rear axle further includes brakes 24 as well as hub gears 25, e. g., of the planetary gear type. One rear wheel of the rear axle is denoted with the reference numeral 8 in the figure. The power input shaft for the differential gear 7 of the rear axle is the conical drive-wheel shaft denoted with the reference numeral 26, which shaft 26 transfers the power to the rear axle through the gear transmission in the gearbox 4. To the front axle (not shown) the power is transferred from the gearbox 4 in the conventional way by means of a cardan shaft 9 and a hydraulically connectable multi-disk clutch 10. With the exception of the brakes, the construction and the mode of operation of the front axle may be fully similar to the construction and the mode of operation of the rear axle 6.

In the figure in the drawing, the lifting gear (three-point lifting gear) is denoted with the reference numeral 12. The construction of the lifting gear 12 is conventional, comprising a hydraulic lifting cylinder or lifting cylinders 14, which operate the traction arms 13 by the intermediate of an articulated linkage 15. As is shown in the figure, the articulated linkage 15 consists of an equalizing shaft, lifting arms, and of lifting rods. The lifting cylinders 14 are operated through a proportional valve 11 passing the pressure supplied by the hydraulic pump 5 to the lifting cylinders 14.

The control system in accordance with the invention for limitation of the slippage of the driving wheels includes a detector system, by whose means the control system can judge the necessity of limitation of slippage in each particular situation. First, the system of detectors comprises a first detector 16, which measures the speed of the gearbox so that the speed range of the gearbox 4 that is used does not affect the measurement result. In the arrangement shown in the figure, the first detector 16, which measures the gearbox 4 speed, is arranged to measure the speed of rotation of the conical drive-wheel shaft 26 passing to the differential gear 7 of the rear axle. As the measurement result given by the first detector 16, the theoretical speed of the tractor is obtained. Secondly, the control system includes a second detector 17, which is based, e. g., on the microwave technology and which measures the ground speed, i. e. the factual travel speed of the tractor.

Further, the control system includes a programmable central unit 18 of the microprocessor type, to which unit said detectors 16, 17 are connected so that they transmit the signals corresponding to their measurement data to said central unit 18. The control system further includes an operation unit denoted with the reference numeral 19, which includes a correction switch 20 operated by the driver. The correction switch 20 is a multi-position (e.g., six-position) switch, by whose means the driver can select if the automatic slippage control is to be switched on, and, on the other hand, by means of the same operation switch 20, the driver selects the magnitude of the desired correction movement of the lifting gear 12. Further, the control system includes a unit 21 for the control of the lifting gear, in which unit the lifting-gear position regulator, a potentiometer, is connected to the proportional valve 11 so that, by means of said position regulator 22, the desired working height of the lifting gear 12, e.g. the working depth of a plough mounted on the lifting gear 12, is selected.

The above central unit 18, operation unit 19, and the lifting-gear control unit 21 are interconnected so that, by means of the correction switch 20 in the operation unit, on one hand, the central unit 18 is told whether the automatic slippage control is to be switched on and, at the same time, depending on the position of the correction switch 20, the lifting-gear control unit 21 is notified of the magnitude of the desired correction movement of the lifting gear 12. Into the central unit 18, the driver can program the desired slippage limit of the driving wheels and, during operation, the central unit 18 constantly calculates the slippage of the driving wheels. The operation unit 19 is fitted between the central unit 18 and the lifting-gear control unit 21 so that the operation unit 19 acts as an adapter between the central unit 18 and the control unit 21.

The principle of operation of the control system in accordance with the invention is as follows:

The operator programs an operation parameter into the central unit 18 of the arrangement, which parameter acts as the criterion for the control of the automatic limitation of slippage. This parameter is a simple percentage, which states the difference in speed between the ground speed and the gearbox 4 speed as a percentage. When the difference in speed is 0, there is no slippage at the wheels of the tractor, and then the parameter is 0. When the parameter is higher than 0, the wheels slip. The control system constantly examines the slippage of the tractor wheels by means of the ground speed detector 17 and the gearbox rotation-speed detector 16. Thus, the driver programs the desired percentage number into the central unit 18 and, if the factual slippage of the driving wheels is higher than this percentage, the central unit 18 of the control system gives the operation unit 19 a control command to effect the desired correction movement of the lifting gear 12. As soon as the factual value of the slippage is lower than the parameter given by the driver, the control command is deleted. In the control system, there is a little difference between the values of switching on and switching off of the correction to prevent oscillation.

The factual value that is needed by the central unit 18 is obtained by means of the measurement data given by the gearbox rotation-speed detector 16 and by the ground speed detector 17 from the following formula:

$$P = \frac{\text{gearbox speed} - \text{ground speed}}{\text{ground speed}} \cdot 100\ \%$$

The factual value of the parameter P, which is calculated by the central unit 18, states when the correction movement of the lifting gear 12 must be carried out.

As was already stated above, the operation unit 19 includes a multi-position correction switch 20, which has, e.g., six different positions. Said correction switch 20 is a potentiometer/series resistor, by whose means the driver can select the magnitude of the slippage-control correction movement. The first position of the correction switch 20 tells the central unit 18 that automatic control is not needed. The remaining positions of the correction switch 20 (e. g., five different positions), on one hand, tell the central unit 18 that the automatic control is on and, on the other hand, they tell the lifting-gear control unit 21 the magnitude of the desired correction movement. The correction movement is carried out so that the information from the position regulator 22 (potentiometer) of the lifting-gear control unit 21 is brought to the operation unit 19, where a series resistance is connected to this signal. The magnitude of the series resistance determines the magnitude of the lifting-gear 12 correction movement, for the resistance alters the lifting-gear 12 set value given by the position-regulator potentiometer 22. In the first position, the magnitude of the series resistance is 0, whereby, in this position, the position-regulator potentiometer 22 operates in the normal way. In the other positions, the resistance increases with logical steps. The control provided by the central unit 18 to the operation unit 19 always connects this selected resistance to the potentiometer line between the operation unit 19 and the control unit 21 when the slippage limit is exceeded, which produces a correction movement of preset magnitude. The control system further includes a wiring which prevents the operation mentioned above when exclusively the lifting-gear 12 position control is used for the control. This property is a safety factor.

The control system may also be used as a sound signal alarm of slippage, because the control system is such a wiring that if the magnitude of the correction movement is selected from the slippage operation unit 19 by means of the position regulation of the lifting gear 12, in which case a correction movement caused by slippage is prevented, now the volume of the sound signal is selected in stead of the magnitude of the correction movement.

Above, the invention has been described by way of example with reference to the figure in the accompanying drawing. The invention is, however, not confined to the exemplifying embodiment illustrated in the figure alone, but different embodiments of the invention may show variation within the scope of the inventive idea defined in the accompanying claims.

## Claims

1. Method for automatic limitation of the slippage of the driving wheels of a tractor or of an equivalent working machine in a tractor or equivalent which is provided with an electro-hydraulically operating, electronically controlled lifting gear ( 12) that is intended for operation of working machines and devices connected to the tractor or equivalent, in which method the slippage of the driving wheels (8) is determined by measuring the speed of rotation of the driving wheels (8) and the factual travel speed of the tractor or equivalent and by comparing said speeds with one another in an electronic central unit (18), **characterized** in that, into the central unit (18), a permitted limit value is programmed for the slippage of the driving wheels and that the desired correction movement is preset for the height position of the lifting gear (12), whereby, when the factual slippage of the driving wheels (8) is increased to a level higher than said limit value, the slippage of the driving wheels (8) is limited by raising the lifting gear (12) by the amount of the preset correction movement.

2. Method as claimed in claim 1, **characterized** in that the slippage of the driving wheels is determined as a percentage ratio of the difference between said speeds to the factual travel speed.

3. Method as claimed in claim 1 or 2, **characterized** in that, when the factual slippage of the driving wheels is reduced to a level lower than the preprogrammed limit value, the height position of the lifting gear (12) is restored to its set value.

4. Method as claimed in any of the preceding claims, **characterized** in that the height position of the lifting gear (12) is corrected with a delay in relation to the change in the factual slippage of the driving wheels (8) in order to prevent oscillation.

5. Arrangement for automatic limitation of the slippage of the driving wheels of a tractor or of an equivalent working machine in a tractor or equivalent which is provided with an electro-hydraulically operating, electronically controlled lifting gear (12) that is intended for operation of working machines and devices connected to the tractor or equivalent, said arrangement including detectors (16,17) for measurement of the gearbox speed and of the factual travel speed, a programmable central unit (18), to which said detectors (16,17) have been arranged to feed signals corresponding to the measurement data, and which central unit (18) is arranged, on the basis of said signals, to calculate the momentary slippage of the driving wheels (8), and said arrangement further including a lifting-gear control unit (21), which is connected to the lifting cylinder (14) of the lifting gear through a proportional valve (11) and which is provided with a position regulator (22), **characterized** in that, into said central unit (18), a permitted limit value of the slippage of the driving wheels (8) has been programmed in advance and that, to the central unit (18), an operation unit (19) is connected, by whose means a correction movement of the desired magnitude can be preset for the height position of the lifting gear (12), whereby, when the factual slippage of the driving wheels (8) exceeds the permitted limit value of slippage, the control system is arranged to correct the height position of the lifting gear (12) by the amount of the preset correction movement.

6. Arrangement as claimed in claim 5, **characterized** in that the operation unit (19) is provided with a multi-position correction switch (20), by whose means several different values can be selected for the correction movement of the lifting gear.

7. Arrangement as claimed in claim 5 or 6, **characterized** in that, when the measured slippage of the driving wheels (8) is reduced to a level lower than the preset limit value, the control system is arranged to restore the position of the lifting gear (12) to its set value.

8. Arrangement as claimed in any of the claims 5 to 7, **characterized** in that the control system is provided with a delay logic to prevent oscillation.

EP 0 462 950 A1

| | European Patent Office | EUROPEAN SEARCH REPORT | Application Number |
|---|---|---|---|

EP 91 85 0131

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 241 748 (BOSCH)<br>* whole document *<br>--- | 1-3,5,7 | A 01 B 63/111 |
| A | EP-A-0 092 316 (DEERE)<br>* page 5, lines 4-36; figure 1 *<br>--- | 1,5 | |
| A | TECHNICA vol. 23, 1986, pages 40,41,<br>Zürich, CH; H. HESSE: "Elektronische<br>Schlupfregelung an Traktoren"<br>* whole document *<br>--- | 1,5 | |
| A | DE-A-2 508 620 (VALMET)<br>* whole document *<br>--- | 1,2,4,5<br>,8 | |
| A | DE-A-2 647 077 (MAGNETI MARELLI)<br>* whole document *<br>----- | 1,2,4,5<br>,8 | |

| | | | TECHNICAL FIELDS SEARCHED (Int. Cl.5) |
|---|---|---|---|
| | | | A 01 B<br>B 62 D<br>B 60 K |

The present search report has been drawn up for all claims

| Place of search | Date of completion of the search | Examiner |
|---|---|---|
| BERLIN | 06-09-1991 | KRIEGER P O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

8